# EUROPEAN PATENT SPECIFICATION

(11) **EP 1 427 609 B1**
(45) Date of publication and mention of the grant of the patent: **22.11.2006**
(21) Application number: 01970892.4
(22) Date of filing: 12.09.2001
(51) Int. Cl.: B60R 19/02, B60R 19/03, B60R 19/26, B60R 19/34, B60R 19/18

(54) **ENERGY ABSORBER WITH CRASH CANS**
ENERGIEABSORBER MIT QUETSCHDOSEN
DISPOSITIF AMORTISSEUR D'ENERGIE AVEC AVEC CAISSONS D'ECRASEMENT

(43) Date of publication of application: 16.06.2004
(73) Proprietor: GENERAL ELECTRIC COMPANY, Schenectady, NY 12345 (US)
(72) Inventor: MOOIJMAN, Frank, NL-4661 NM Halsteren (NL); MCMAHON, Dominic, NL-4611 PE Bergen op Zoom (NL); MAHFET, Michael, Rochester Hills, MI 48307 (US)
(74) Representative: Pedder, James Cuthbert
(86) International application number: PCT/US2001/028582
(87) International publication number: WO 2003/022639

(56) References cited:
- DE-A- 3 020 997
- FR-A- 2 364 789
- US-A- 3 897 095
- US-A- 4 424 996
- US-A- 4 951 986
- US-A- 5 799 991
- US-A- 6 082 792

## Description

### BACKGROUND OF THE INVENTION

This invention relates generally to bumpers and, more particularly, to energy absorbing vehicle bumper systems.

Bumpers typically extend widthwise across the front and rear of a vehicle and are mounted to rails that extend in a lengthwise direction. Energy absorbing bumper systems attempt to reduce vehicle damage as a result of a collision by managing impact energy and intrusion while not exceeding a rail load limit of the vehicle. The efficiency of an energy absorber is defined as the amount of energy absorbed over distance. A high efficiency energy absorber absorbs more energy over a shorter distance than a low energy absorber. High efficiency is achieved by building load quickly to just under the rail load limit and maintaining that load constant until the impact energy has been dissipated.

Increasing the stiffness of an energy absorber generally increases the efficiency of the absorber since a stiff energy absorber builds load more quickly than a less stiff absorber. In addition, there generally is less intrusion with a stiff energy absorber than with a less stiff energy absorber. Increasing the stiffness of the energy absorber, however, can result in an undesirable increase in the weight of the bumper system. Specifically, a more stiff energy absorber generally is heavier than a less stiff absorber.
US 6,082, 792 describes a bumper assembly according to the preamble of claim 1.

Some known energy absorbing bumper systems include a foam resin, such as described in U.S. Patent No. 4,762,352 and U.S. Patent No. 4,941,701. Foam based systems typically have slow loading upon impact, which results in a high displacement. Further, foams are effective to a sixty or seventy percent compression, and beyond that point, foams become incompressible so that the impact energy is not fully absorbed. The remaining impact energy is absorbed through deformation of a backup beam and/or vehicle structure. Foams are also temperature sensitive so that displacement and impact absorption behavior can change substantially with temperature. Typically, as temperature is lowered, foam becomes more rigid, resulting in higher loads. Conversely, as temperature rises, foams become more compliant resulting in higher displacements and possible vehicle damage.
US 5,799,991 describes a bumper system including crash cans.

Some further known bumper systems include crash cans. The crash cans are separately fabricated and attached directly to the beam in alignment with the vehicle rails. The crash cans absorb energy during impact, e.g., an offset impact, and facilitate preventing damage to the beam. Separately fabricating and attaching the crash cans to the beam, however, increases bumper assembly costs and complexity.

### BRIEF SUMMARY OF THE INVENTION

In one aspect, a bumper assembly according to claim 1 for an automotive vehicle is provided.

### BRIEF DESCRIPTION OF THE DRAWINGS

Figure 1 is a cross-sectional view of a known energy absorber shown in a pre-impact condition;

Figure 2 is a cross-sectional view of a known energy absorber shown in a post-impact condition;

Figure 3 is an exploded perspective view of a bumper assembly including a beam and injection molded energy absorber;

Figure 4 is a perspective view of a portion of the bumper assembly shown in Figure 3;

Figure 5 is a cross-sectional view of the bumper assembly shown in Figure 3;

Figure 6 is a perspective view of an energy absorber with magnified partial perspective views of alternative window arrangements;

Figure 7 is a perspective view of a portion of a bumper assembly including a snap fit crash can; and

Figure 8 is a cross-sectional view of the bumper assembly shown in Figure 7.

### DETAILED DESCRIPTION OF THE INVENTION

A bumper system that includes an energy absorber of the non-foam type with crash cans is described below in detail. The crash cans are sometimes described herein as being integral with the energy absorber. The term integral means that the crash cans are formed as a component of, and not separately from, the energy absorber, which results in a one-piece unitary structure for the energy absorber. While the crash can be separate from the energy absorber, as described below in more detail, a one piece, unitary energy absorber including the crash cans is believed to facilitate manufacturing as well as assembly of the energy absorber to a bumper rail.
A bumper comprising a crash cans being integral with the energy absorber does not belong to the invention.

Combining a non foam type energy absorber with crash cans results in a bumper system that achieves fast loading and efficient energy absorption upon impact. Specifically, impact forces during low speed and high speed impacts are maintained just below a predetermined level by deforming the energy absorber and beam until the kinetic energy of the impact event has been absorbed. When the low speed impact is over, the energy absorber returns substantially to its original shape and retains sufficient integrity to withstand subsequent impacts.

Further, combining the efficient energy absorbing properties of a thermoplastic energy absorber with the integrated crash cans is believed to provide improved impact absorbing performance over traditional metal beams with foam energy absorbers. In addition, the thermoplastic energy absorber with integrated crash cans is believed to provide more efficient impact absorption than steel beams with a thermoplastic energy absorbers that do not include crash cans.

The energy absorber also achieves efficient energy absorption upon impact with a lower leg. Specifically, impact forces and impactor geometry during impacts (e.g., 40 Km/hr impacts) can be maintained within predetermined levels by deforming the energy absorber in a controller manner. Once the impact is over, the absorber returns substantially to its original shape and retains sufficient integrity to withstand subsequent impacts. Such an arrangement provides lower leg pedestrian impact protection.

Further, the energy absorber can be packaged in a small space as compared to conventional foam systems. The automotive designers therefore have enhanced freedom to style bumpers while achieving pedestrian impact requirements. Also, since the energy absorbing system can be unitary and integrally molded thermoplastic engineering resin, the energy absorbing system can be easily recycled. Greater consistency also is achieved over varied temperatures, in comparison to foam systems. In addition, the energy absorber provides a smooth, predictable loading response regarding of the impact direction.

Although the bumper system is described below with reference to specific materials (e.g., Xenoy® material (commercially available from General Electric Company, Pittsfield, Massachusetts) for the energy absorber), the system is not limited to practice with such materials and other materials can be used. In addition, the beam need not necessarily be a steel beam, and other materials and fabrication techniques can be utilized. Generally, the energy absorber is selected from materials that result in efficient energy absorption, and the beam materials and fabrication technique are selected to result in a stiff beam.

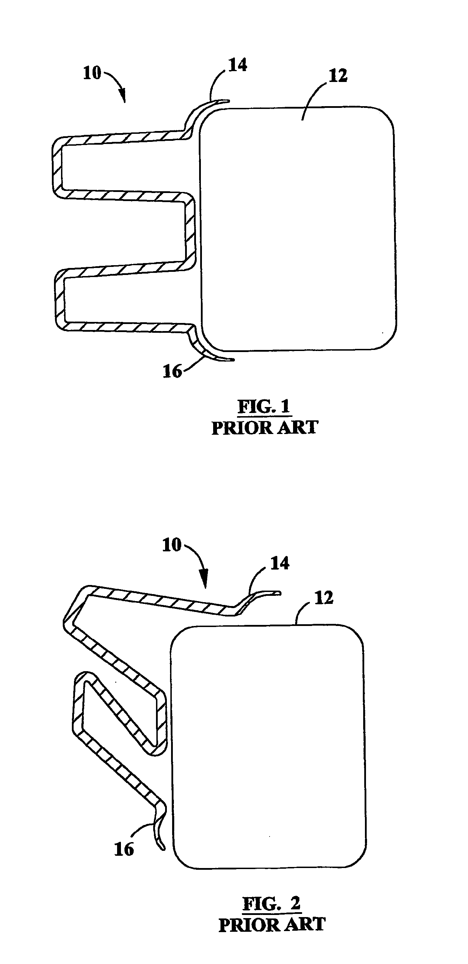

Referring now specifically to the drawings, Figures 1 and 2 are cross-sectional views a known energy absorber 10 as used in association with a reinforcing beam 12. Energy absorber 10 includes upper and lower flanges 14 and 16, respectively, which upon installation overlap a portion of beam 12. As shown in Figure 2, absorber 10 tends to buckle as opposed to absorbing and dissipating the impact energy resulting from a collision.

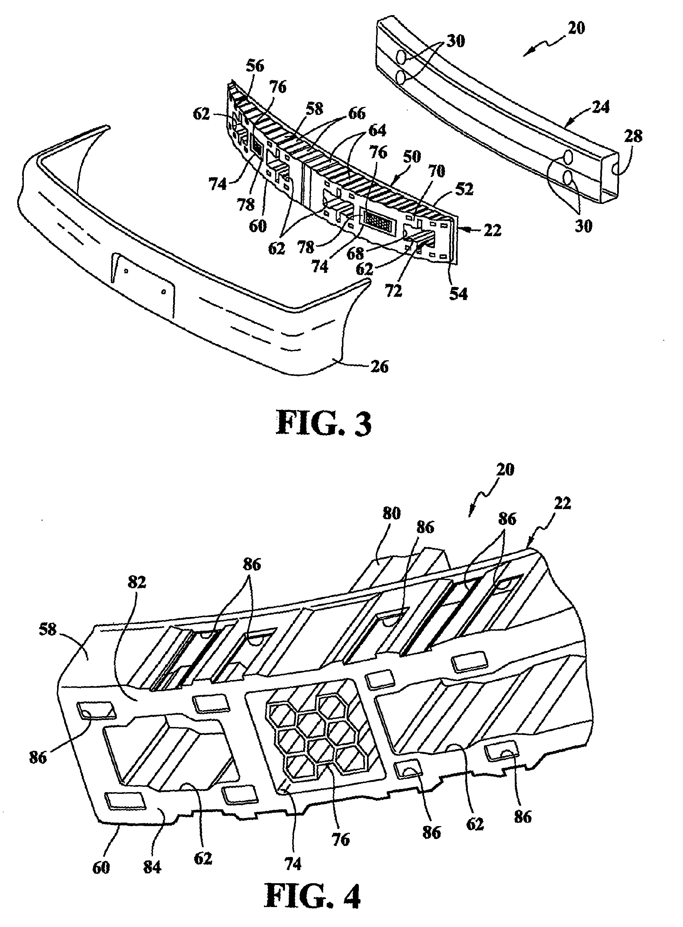

Figure 3 is an exploded perspective view of one embodiment of a bumper system 20. System 20 includes an energy absorber 22 and a beam 24. Energy absorber 22 is positioned between beam 24 and a fascia 26 which, when assembled, form a vehicle bumper. As should be understood by those skilled in the art, beam 24 is attached to lengthwise extending frame rails (not shown).

Fascia 26 is formed from a thermoplastic material which is amenable to finishing utilizing conventional vehicle painting and/or coating techniques. Fascia 26 envelops both energy absorber 22 and beam 24 such that neither component is visible once attached to the vehicle.

Beam 24, in the example embodiment, is steel and has a rectangular cross sectional shape. Beam 24 is hollow, i.e., a channel 28 extends through beam 24, and includes openings 30 for securing beam 24 to the frame rails of the vehicle, as described below in more detail. Rather than steel, beam 24 could, for example, be fabricated from a glass mat thermoplastic (GMT) or another plastic that provides a strength and stiffness required for a particular bumper application.

Energy absorber 22 includes a frame 50 having first and second longitudinally extending flanges 52 and 54, respectively, which overlap beam 24. Absorber 22 further includes a body 56 that extends outward from frame 50, and body 56 includes a first transverse wall 58 and a second transverse wall 60 having a plurality of tunable crush boxes 62 extending therebetween. Transverse walls 58, 60 are rippled including alternating raised areas 64 and depressed areas 66 which provide transverse walls 58, 60 with added stiffness to resist deflection upon impact. The width and depth dimensions of the ripples can be modified to achieve different stiffness characteristics as desired. Crush boxes 62 include side walls 68, an outer wall 70, and open areas 72 that extend to inner frame 50.

In addition to crush boxes 62, crash cans 74 are between walls 58 and 60 and are positioned to align (axially) with the vehicle rails. Crash cans 74 include, in the example embodiment, honeycomb shaped structures 76 and open areas 78 that extend to frame 50.

Referring to Figure 4, which is a perspective view of a portion of bumper assembly 20, crash can 74 is aligned with rail 80 of a vehicle, and is positioned between crush boxes 62. Crush boxes 62 can have any one of a number of different geometries depending on the impact energy requirements for the vehicle. Example crush boxes 62 have an overall three-dimensional I-shape including a wing or top portion 82 adjacent first transverse wall 58 and a bottom wing portion 84 adjacent second transverse wall 60.

Crash cans 74 also can have any one of a number of different geometries depending on the impact energy requirements for the vehicle. Example crash cans 74 have an overall square dimensional shape with honeycomb shaped structure 76 therein. Crash cans 74 facilitate absorbing energy during an offset impact, i.e., when the impact involves only a portion of bumper assembly 20. Crash cans 74 also provide a stiffness tunability in order to meet the desired impact load deflection criteria. That is, modifications can be made to crash cans 74 for any given application in an effort to meet the targeted criteria. For example, the spacing between the walls and the size of honeycomb structure 76 can be selected depending on the particular application.

The tunability of crash cans 74 can also be tailored for specific applications by varying the wall thickness. For example, the nominal thickness of the walls may broadly range from about 1.75 mm to about 3.0 mm. More specifically, for certain low impact applications the nominal wall thickness may generally range from about 1.75 mm to about 2.0 mm and for other applications the walls would more likely be in the range of about 2.5 mm to 3.0 mm.

Crush boxes 62 of energy absorber 22 stabilize energy absorber 22 during an impact event. In this regard, crush boxes 62 provide for an axial crush mode in both barrier and pendulum impacts according to Federal Motor Vehicle Safety Standard (FMVSS) and Canadian Motor Vehicle Safety Standard (CMVSS). Crush boxes 62 also provide a stiffness tunability in order to meet the desired impact load deflection criteria. That is, modifications can be made to crush boxes 62 for any given application in an effort to meet the targeted criteria. For example, crush boxes 62 include a plurality of windows 86. Windows 86 can be configured to have one of many different shapes depending on the particular application.

The tunability of crush boxes 62 can also be tailored for specific applications by varying the side and rear wall thickness. For example, for the nominal wall thickness of the side and the outer wall may broadly range from about 1.75 mm to about 3.0 mm. More specifically, for certain low impact applications the nominal wall thickness may generally range from about 1.75 mm to about 2.0 mm and for other applications, particularly those for a 5 mph FMVSS or CMVSS system, the nominal wall thickness for the side and rear walls would more likely be in the range of about 2.5 mm to 3.0 mm.

Another aspect in appropriately tuning energy absorber 22 is the selection of the thermoplastic resin to be employed. The resin employed may be a low modulus, medium modulus or high modulus material as needed. By carefully considering each of these variables, energy absorbers meeting the desired energy impact objectives can be manufactured.

More specifically, the characteristics of the material utilized to form energy absorber 22 include high toughness/ductility, thermally stable, high energy absorption capacity, a good modulus-to-elongation ratio and recyclability. While the energy absorber may be molded in segments, the absorber also can be of unitary construction made from a tough plastic material. An example material for the absorber is Xenoy, as referenced above. Of course, other engineered thermoplastic resins can be used. Typical engineering thermoplastic resins include, but are not limited to, acrylonitrile-butadiene-styrene (ABS), polycarbonate, polycarbonate/ABS blend, a copolycarbonate-polyester, acrylic-styrene-acrylonitrile (ASA), acrylonitrile-(ethylene-polypropylene diamine modified)-styrene (AES), phenylene ether resins, blends of polyphenylene ether/polyamide (NORYL GTX® from General Electric Company), blends of polycarbonate/PET/PBT, polybutylene terephthalate and impact modifier (XENOY® resin from General Electric Company), polyamides, phenylene sulfide resins, polyvinyl chloride PVC, high impact polystyrene (HIPS), low/high density polyethylene (1/hdpe), polypropylene (pp) and thermoplastic olefins (tpo).

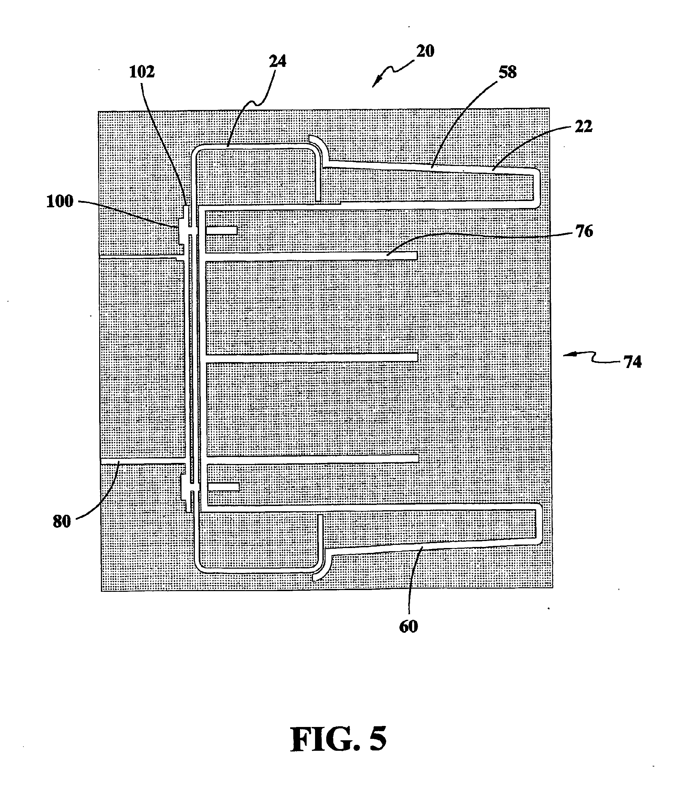

Figure 5 is a cross-sectional view of the bumper assembly 20 secured to rail 80. As shown in Figure 5, bolts 100 extend through openings in a mounting plate 102 welded to rail 80, as well as through openings 30 in beam 24 and openings in energy absorber 22. Bumper assembly 20, including integral crash cans 74, therefore is easily and readily secured to rails 80 without requiring separate alignment and attachment of crash cans 74.

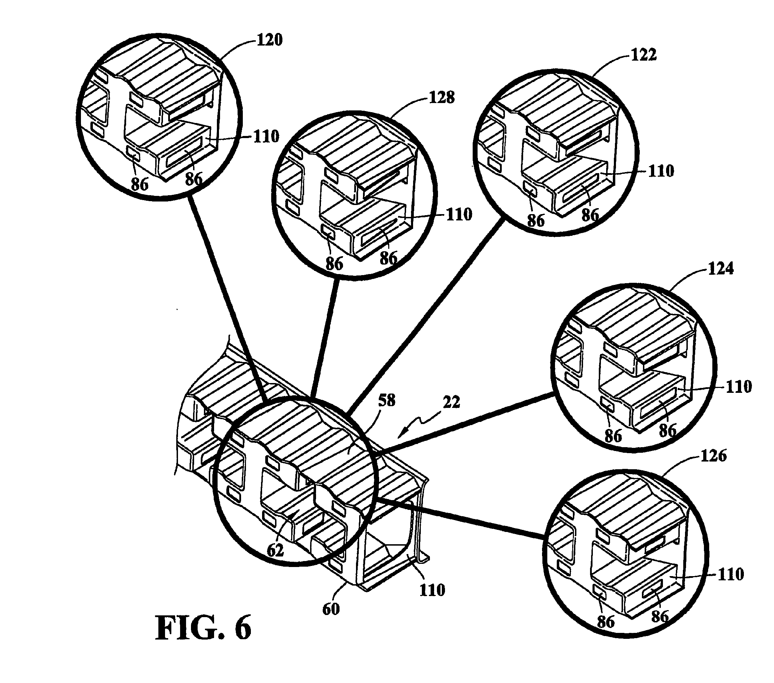

Figure 6 is a perspective view of a portion of energy absorber 22 illustrating magnified partial perspective views of alternative window arrangements. As illustrated in Figure 6, integrally molded connecting members 110 extend vertically between the first and second transverse walls 58 and 60, respectively. Connecting members 110 may be in the form of vertically extending posts or may have a cross shaped structure including both a vertically extended posts and horizontally extending posts. Regardless of the configuration of connecting members 110, connecting member 110 may have a minimum average width to height ratio of 1:5 along the inner wall of the vertically extending post, the height being measured as the distance between the first and second traverse walls 58 and 60, respectively. If connecting member 110 includes windows 86 the width to height ratio is 1:3.

As shown in Figure 6 and with respect to the tunability of crush boxes 62, windows 86 can be, but are not limited to, squares and rectangles of different dimensions as shown at 120, 122, 124, 126 and tear drop shapes as shown at 128 in order to achieve the desired stiffness of the crush box. To form the windows, a typical mold will include approximately a 5° open draft angle so as to obtain suitable manufacturing conditions.

As explained above, integrating crash cans with an injection molded thermoplastic energy absorber coupled to a stiff beam is believed to provide enhanced energy absorption efficiency. Enhanced impact performance translates to reduced costs of repair for low speed "fender benders" and reduced vehicle damage during higher speed collisions. Further, since foam is not utilized, it is believed that greater consistency of impact performance may be achieved over varied temperatures.

Rather than integrating the crash cans with the thermoplastic energy absorber, it is contemplated that the crash cans can be formed separate from the energy absorber and either attached to, e.g., press or snap fit, welded, to the energy absorber or with the bumper rail. Separate fabrication of the energy absorber and crash cans provides an advantage in that the crash cans can then more readily be fabricated using materials different from the material used to fabricate the energy absorber. Of course, various attachment techniques other than a press fit or snap fit (e.g., bolts) can be used to secure the crash cans to the energy absorber or rail.

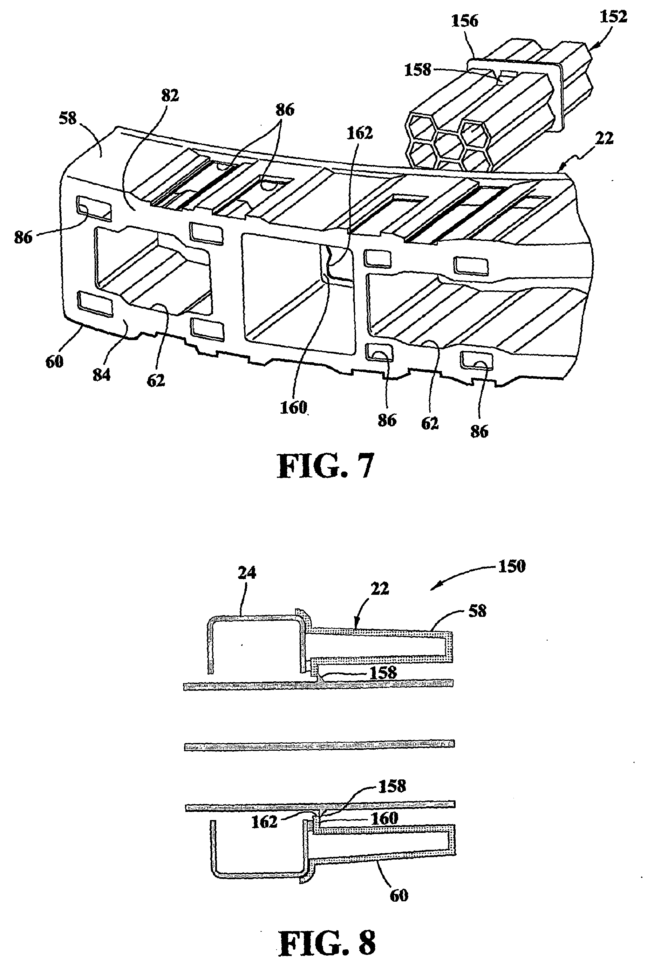

For example, and referring to Figures 7 and 8 which are a perspective view of a portion of a bumper assembly 150 including a snap fit crash can 152 and a cross-sectional view of bumper assembly 150, respectively, components in Figures 7 and 8 identical to components in Figure 4 are identified in Figures 7 and 8 using the same reference numerals in Figure 4. As shown in Figures 7 and 8, a honeycomb structure 154 (i.e., crash can 154) includes a flange 156 and a snap 158 spaced from flange 156. Energy absorber 22 also includes a wall 160 having an opening 162 therethrough, and opening 162 is sized so that structure 152 can be partially inserted therethrough. Crash can 152 is inserted through opening 162 until flange 156 abuts wall 160. Snap 158 snaps over wall 160 so that wall 160 is trapped between snap 158 and flange 156.

Of course, other attachment techniques can be used to attach crash cans to an energy absorber. For example, the crash cans can be press fit or vibration welded to the energy absorber. Figures 7 and 8 illustrate just one example of how separately fabricated crash cans can be secured to an energy absorber.

The combination of the tunable crash cans and the tunable crush boxes with the energy absorber provides an efficient, fast loading and controlled impact event. This high efficiency is believed to result in facilitating reducing vehicle bumper offsets without increasing the loads transferred to the vehicle structure.

## Claims

1. A bumper assembly (20) comprising:
a beam (24);
an injection molded energy absorber (22) secured to said beam, and
a fascia (26) covering at least a portion of said beam and said energy absorber, said energy absorber comprising a flanged frame (50) for attachment to said beam; and a body (56) extending from said frame, said body comprising a first transverse wall (58) and a second transverse wall (60) spaced from said first wall, **characterised in that**
said energy absorber further comprises:
at least one crash can (74), each said crash can being able to absorb energy and being positioned in an opening (72) extending through said energy absorber .

2. A bumper assembly (20) according to claim 1 wherein said beam is at least one of steel and a thermoplastic.

3. A bumper assembly (20) according to claim 1 wherein said crash can (74) is attached to said energy absorber.

4. A bumper assembly (20) according to claim 1 wherein the at least one crash can (74) is located between the first and second transverse walls (58, 60).

5. A bumper assembly (20) according to claim 1 wherein the frame (50), body (56) and crash can (74) are injection molded.

6. A bumper assembly (20) according to daim 1 wherein said first and second transverse walls (58,60) are rippled.

7. A bumper assembly (20) according to claim 1 wherein said energy absorber (22) comprises at least one crush box (74) between said first and second transverse walls (58, 60).

## Patentansprüche

1. Stoßfängeranordnung (20), die aufweist:
einen Querträger (24),
einen spritzgegossenen Energieabsorber (22), der an dem Querträger befestigt ist und
eine Außenhaut (26), die wenigstens einen Abschnitt des Querträgers und des Energieabsorbers überdeckt, wobei der Energieabsorber einen geflanschten Rahmen (50) zur Befestigung an dem Querträger aufweist und
einen Körper (56), der sich von dem Rahmen weg erstreckt, wobei der Körper eine erste Querwand (58) und eine zweite Querwand (60) aufweist, die von der ersten Querwand beabstandet ist, **dadurch gekennzeichnet, dass**
der Energieabsorber außerdem aufweist:
wenigstens einen Crashkörper (74), wobei jeder dieser Crashkörper in der Lage ist, Energie zu absorbieren und in einer Öffnung (72) angeordnet ist, die sich durch den Energieabsorber erstreckt,

2. Stoßfängeranordnung (20) nach Anspruch 1, wobei der Querträger aus Stahl und/oder thermoplastischem Material besteht.

3. Stoßfängeranordnung (20) nach Anspruch 1, bei der der Crashkörper (74) an dem Energieabsorber befestigt ist,

4. Stoßfängeranordnung (20) nach Anspruch 1, bei der der wenigstens eine Crashkörper (74) zwischen der ersten und der zweiten Seitenwand (58, 60) angeordnet ist.

5. Stoßfängeranordnung (20) nach Anspruch 1, bei der der Rahmen (50), der Körper (56) und der Crashkörper (74) spritzgegossen sind.

6. Stoßfängeranordnung (20) nach Anspruch 1, bei der die erste und die zweite Querwand (58, 60) gerippt sind.

7. Stoßfängeranordnung (20) nach Anspruch 1, bei der der Energieabsorber (22) wenigstens eine Crashbox (74) zwischen der ersten und der zweiten Querwand (58, 60) aufweist.

## Revendications

1. Ensemble de pare-chocs (20) comprenant :
une poutre (24) ;
un absorbeur d'énergie moulé par injection (22) fixé à ladite poutre, et
un bouclier (26) couvrant au moins une partie de ladite poutre et ledit absorbeur d'énergie, ledit absorbeur d'énergie comprenant un cadre à rebord (50) destiné à être fixé à ladite poutre, et un corps (56) qui s'étend depuis ledit cadre, le corps comprenant une première paroi transversale (58) et une seconde paroi transversale (60) distante de ladite première paroi, **caractérisé en ce que** :
ledit absorbeur d'énergie comprend en outre :
au moins une boîte à collision (74), chacune desdites boîtes à collision étant capable d'absorber de l'énergie et étant positionnée dans une ouverture (72) qui s'étend à travers ledit absorbeur d'énergie.

2. Ensemble de pare-chocs (20) selon la revendication 1, dans lequel ladite poutre est composée d'au moins un matériau parmi l'acier et une matière thermoplastique.

3. Ensemble de pare-chocs (20) selon la revendication 1, dans lequel ladite boîte à collision (74) est fixée audit absorbeur d'énergie.

4. Ensemble de pare-chocs (20) selon la revendication 1, dans lequel ladite au moins une boîte à collision (74) est placée entre les première et seconde parois transversales (58, 60).

5. Ensemble de pare-chocs (20) selon la revendication 1, dans lequel le cadre (50), le corps (56) et la boîte à collision (74) sont moulés par injection.

6. Ensemble de pare-chocs (20) selon la revendication 1, dans lequel lesdites première et seconde parois transversales (58, 60) sont ondulées.

7. Ensemble de pare-chocs (20) selon la revendication 1, dans lequel ledit absorbeur d'énergie (22) comprend au moins une boîte d'écrasement (74) située entre lesdites première et seconde parois transversales (58, 60).
